# EUROPEAN PATENT APPLICATION

(11) **EP 1 339 001 A2**
(43) Date of publication of application: **27.08.2003**
(21) Application number: 03004100.8
(22) Date of filing: 25.02.2003
(51) Int. Cl.: G06F 17/60

(54) **Information processor, information processing method, and information processing program**

(30) Priority: 26.02.2002 JP 2002049096
(71) Applicant: Matsushita Electric Industrial Co., Ltd., Kadoma-shi, Osaka-fu, 571-8501 (JP)
(72) Inventor: Kawashima, Takashi, Shimogyo-ku, Kyoto-shi, Kyoto 600-8436 (JP); Fukushima, Hideaki, Kashiba-shi, Nara-ken 639-0265 (JP); Mizuyama, Masashige, Neyagawa-shi, Osaka-fu 572-0019 (JP); Wada, Hiromi, Neyagawa-shi, Osaka-fu 572-0841 (JP); Kobayashi, Takuya, Neyagawa-shi, Osaka-fu 572-0019 (JP); Kato, Atsunobu, Ebina-shi, Kanagawa-ken 243-0411 (JP)
(74) Representative: Gassner, Wolfgang, Dr.

(57) **Abstract**

An information processor that can exchange information in real time between particular users by using an email system, and that can display a mail message received from a non-particular user even when the information is being exchanged. The information processor (1) includes a mail message sending section (101) for sending the mail message, a mail message receiving section (102) for receiving the mail message, a display section (104) for displaying the mail message, and a control section (105) for controlling switching between a particular mail message display mode and a non-particular mail message display mode. When returning to the particular mail message display mode after switching to the non-particular mail message display mode from the particular mail message display mode, the control section (105) causes the display section (104) to redisplay the contents displayed at the time of switching.

## Description

### BACKGROUND OF THE INVENTION

### Field of the Invention

The present invention relates to information processors that perform sending, receiving, and displaying of an email message, more specifically, an information processor for exchanging information efficiently between particular users.

### Description of the Background Art

In recent years, services for sending and receiving an email message by using a mobile phone have become rapidly prevalent. Sending and receiving the email message between privately-owned mobile phone terminals allows a user to exchange text information at any time and any place.

Furthermore, the following services such as a service called "multiaddress calling" for sending the same email message to a plurality of users at the same time, or a service that permits sending and receiving not only of text information but also of image information are also provided. As such, email services using the mobile phone are equivalent in importance to a service provided by a telephone or a personal computer.

Still further, recently developed mobile phones also provide a function (chat session function) of displaying on a screen only email messages sent and received between particular users in chronological order of sending and receiving for exchanging information, as if having a real time conversation in the same manner as a so-called chat. Thus, the user is allowed to carry out chat-like communication between the plurality of users without performing a burdensome operation such as to select an email message sent from the particular users from among all the received email messages for displaying in chronological order of sending and receiving.

Japanese Patent Laid-Open Publication 2001-22657 and U.S. application 5,987,503 disclose a conventional technology.

The above-described conventional technology has the following problems. First, in order to exchange the text information by using the mobile phone for having a chat-like real time conversation, it is necessary to display on the screen only the email messages sent and received between pre-registered users in chronological order of sending and receiving.

However, it is only the email messages sent and received between the pre-registered users that the conventional mobile phone can display on a chat session screen. Therefore, even if an email message is received from a non-registered user when the chat session screen is being displayed, the conventional mobile phone cannot display the received email message unless the chat session screen is ended. That is, the conventional mobile phone cannot display the contents of a newly-received email message or an email message received before the chat session is started.

Furthermore, the conventional mobile phone is also unable to allow the non-registered user who has not been an original chat member to newly join the chat when the chat session screen is being displayed.

### SUMMARY OF THE INVENTION

Therefore, an object of the present invention is to provide an information processor that uses an email system for exchanging text information as if having a chat-like real time conversation. The information processor is able to display an email message sent from a non-particular user during the chat, or allow a user who has not been an original chat member to newly join the ongoing chat.

The present invention has the following features to attain the object mentioned above.

A first aspect of the present invention is directed to an information processor that sends and receives an email message between other communications terminals via a network and displays the sent and received email message, including:
particular mail message display means for displaying, in chronological order of sending and receiving, at least one email message sent and received between previously designated particular users;
non-particular mail message display means for displaying the sent and received email message; and
display mode control means for controlling switching between a display by the particular mail message display means and a display by the non-particular mail message display means,
wherein
when returning to the display by the particular mail message display means after the display has been switched to the display by the non-particular mail message display means from the display by the particular mail message display means, the display mode control means at least causes the particular mail message display means to redisplay contents displayed at a time of switching to the display by the non-particular mail message display means from the display by the particular mail message display means.

According to the first aspect, the information processor can switch the display between the display for a particular mail message and the display for a non-particular mail message, thereby allowing a user to check the non-particular mail message when the particular mail message is being displayed. Furthermore, the information processor can at least redisplay the contents displayed at the time of switching when returning to the display by the particular mail message display means. Thus, the user can smoothly exchange email messages with both a particular user and a non-particular user.

Preferably, the information processor further includes history storing means for storing a send/receive history of the at least one email message sent and received between the particular users, and
when the display is switched to the display by the non-particular mail message display means from the display by the particular mail message display means, the display mode control means stores the most current send/receive history stored in the history storing means, and causes the particular mail message display means to redisplay the contents displayed at the time of switching to the display by the non-particular mail message display means from the display by the particular mail message display means based on the stored most current send/receive history in order to return to the display by the particular mail message display means.

In this case, the information processor can redisplay the contents displayed at the time of switching based on the send/receive history. Thus, it is possible to minimize a storage area used for redisplaying the contents displayed at the time of switching.

Furthermore, when returning to the display by the particular mail message display means, the display mode control means may cause the particular mail message display means to display, in chronological order of sending and receiving, any email message, if any, sent and received between the particular users during a lapse of time necessary for displaying the display by the non-particular mail message display means.

As a result, the information processor can display any message, if any, received during the lapse of time necessary for displaying the display by the non-particular mail message display means, thereby allowing the user to check any message, if any, received during the lapse of time necessary for displaying the display by the non-particular mail message display means. Thus, the user can smoothly exchange the email message with both the particular user and the non-particular user.

Preferably, the information processor further includes history storing means for storing a send/receive history of the at least one email message sent and received between the particular users, and
when returning to the display by the particular mail message display means, the display mode control means causes the particular mail message display means to display, based on a last send/receive history stored in the history storing means, the at least one email message sent and received between the particular users during the lapse of time necessary for displaying the display by the non-particular mail message display means in chronological order of sending and receiving.

In this case, the information processor can display, based on the send/receive history, any email message, if any, received during the lapse of time necessary for displaying the display by the non-particular mail message display means, thereby enabling minimization of a storage area to be used.

Preferably, the information processor further includes mail message composing means for composing an email message to be sent to either a particular user or a non-particular user during the display by the particular mail message display means.

As a result, the information processor can compose the email message to be sent to either the particular user or the non-particular user during the display for the particular mail message, thereby allowing the user to exchange messages with the particular user as if having a conversation (a chat) and with the non-particular user.

More preferably, the mail message composing means may compose the email message in accordance with pre-registered auto text.

As a result, the information processor can compose the email message by using the auto text, thereby allowing the user to reply to the received email message quickly.

Furthermore, more preferably, the mail message composing means may compose the email message by assuming that all of the at least one particular user is designated as a destination.

As a result, the information processor can save the user from designating the destination because all of the at least one particular user is a destination.

Furthermore, more preferably, when the email message to be sent to the non-particular user is composed, the mail message composing means may compose the email message including contents of the at least one message that has been displayed by the particular mail message display means.

As a result, the email message, which includes the at least one message previously sent and received, to be sent to either the particular user or the non-particular user is composed, thereby allowing the user who has received the email message to determine whether to join the chat or not based on the received email message.

Preferably, the information processor further includes mail message organizing means for performing bulk deleting of the at least one email message used for the display by the particular mail message display means.

In this case, the at least one email message used for the chat is deleted in bulk, thereby enabling effective utilization of the storage area of the information processor.

Specifically, when the display by the particular mail message display means is ended, the mail message organizing means automatically performs bulk deleting of the at least one email message used in the display by the particular mail message display means.

As a result, the at least one email message used for the chat is assumed to be deleted automatically concurrently with the end of the chat.

Preferably, the information processor further includes user registration means for registering and/or deleting the at least one particular user when the display is being performed by the particular mail message display means.

In this case, the information processor can perform addition of a particular user or deletion thereof even if the chat is being carried out. As a result, the information processor can display the email message received from the newly added particular user in chronological order of sending and receiving without hampering the flow of a series of the chat. Furthermore, the information processor does not display the email message from the deleted particular user as a chat message after deletion is performed. As a result, the information processor can allow the user to carry out smooth communication by a chat.

Preferably, when the at least one email message is received from the at least one particular user during the display, the particular mail message display means newly displays the at least one email message in chronological order of sending and receiving.

As a result, when the display is being displayed by the particular mail message display means, the message is newly displayed one after another, thereby allowing the user to exchange the message as if carrying out the chat by using a dedicated server.

Preferably, when the email message is received from a non-particular user during the display, the particular mail message display means displays on a screen a notification of the received email message.

As a result, the information processor notifies that the email message has been received from the non-particular user by such as a PICT display, thereby allowing the user to know the receipt of the email message. Thus, the user can determines when to switch the display based on their own decision.

Preferably, when the at least one email message is received from the at least one particular user, the display mode control means may automatically switch the display to that of the display by the particular mail message display means.

As a result, the display is automatically switched, thereby saving the user from having to manually switch ,the display.

Preferably, the information processor further includes history storing means for storing, on a group basis, a send/receive history of the at least one email message sent and received between the particular users, and
the particular mail message display means refers to the history storing means in accordance with an instruction from a user, and redisplays the at least one email message of a designated group for displaying in chronological order of sending and receiving.

In this case, the information processor stores the send/receive history of the at least one email message on a group basis, and displays the at least one message also on a group basis, thereby allowing the user to carry out the chat easily between the users who share a common subject.

A second aspect of the present invention is directed to a method for displaying an email message sent and received by a communications device, wherein
the communications device includes as a display mode:
a particular mail message display mode of displaying, in chronological order of sending and receiving, at least one email message sent and received between previously designated particular users; and
a non-particular mail message display mode of displaying the sent and received email message, and the method includes:
   a step in which the communications device switches a display to that of a display in the non-particular mail message display mode from a display in the particular mail message display mode; and
   a step in which the communications device returns to the display in the particular mail message display mode after switching, wherein
in the step of returning to the display in the particular mail message display mode, at least contents displayed at a time of switching to the display in the non-particular mail message display mode from the display in the particular mail message display mode are redisplayed by the communications device.

Preferably, the method further includes a step in which the communications device stores a send/receive history of the at least one email message sent and received between the particular users, and
in the step of switching to the display in the non-particular mail message display mode from the display in the particular mail message display mode, a most current send/receive history is stored by the communications device, and
in the step of returning to the display in the particular mail message display mode, the contents displayed at the time of switching to the display in the non-particular mail message display mode from the display in the particular mail message display mode are redisplayed by the communications device based on the most current send/receive history stored by the communications device.

Furthermore, preferably, the method further includes a step in which the communications device stores a send/receive history of the at least one email message sent and received between the particular users, and
in the step of returning to the display in the particular mail message display mode, the at least one email message sent and received, between the particular users, during a lapse of time necessary for displaying the display in the non-particular mail message mode, is displayed by the communications device based on the send/receive history that has been stored by a time of switching to the display in the particular mail message display mode from the display in the non-particular mail message display mode, in chronological order of sending and receiving.

Still further, preferably, the method further includes a step in which the communications device deletes the at least one email message used for the display in the particular mail message display mode when the display in the particular mail message display mode is ended.

A third aspect of the present invention is directed to a program for causing a computer to display an email message sent and received via a network, and
the computer includes as a display mode:
a particular mail message display mode of displaying, in chronological order of sending and receiving, at least one email message sent and received between previously designated particular users; and
a non-particular mail message display mode of displaying the sent and received email message, and the program includes:
   a step of causing the computer to switch the display mode to the non-particular mail message display mode from the particular mail message display mode; and
   a step of causing the computer to return to the particular mail message display mode after switching, wherein
in the step of causing the computer to return to the particular mail message display mode, the computer is caused to redisplay at least contents displayed at a time of switching to the display in the non-particular mail message display mode from the display in the particular mail message display mode.

Preferably, the program further includes a step of causing the computer to store a send/receive history of the at least one email message sent and received between the particular users, and
in the step of causing the computer to switch the display mode, the computer is caused to store a most current send/receive history, and
in the step of causing the computer to return to the particular mail message display mode, the computer is caused to redisplay, based on the most current send/receive history stored by the computer, the contents displayed at the time of switching to the display in the non-particular mail message display mode from the display in the particular mail message display mode.

Furthermore, preferably, the program further includes a step of causing the computer to store a send/receive history of the at least one email message sent and received between the particular users, and
in the step of causing the computer to return to the particular mail message display mode, the computer may be caused to display, based on the send/receive history that has been stored by a time of switching to the display in the particular mail message display mode from the display in the non-particular mail message display mode, the at least one email message sent and received between the particular users during the lapse of time necessary for displaying the display in the non-particular mail message mode in chronological order of sending and receiving.

Still further, preferably, the program may further include a step of causing the computer to delete the at least one email message used for the display in the particular mail message display mode when the display in the particular mail message display mode is ended.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is an illustration showing the entire structure of an exemplary system using an information processor 1 according to an embodiment of the present invention;
FIG. 2 is an illustration showing an exemplary display screen of the information processor 1;
FIG. 3 is a block diagram showing the functional structure of the information processor 1;
FIG. 4 is an illustration showing exemplary particular users registered in a particular user registration section 106;
FIG. 5 is an illustration showing an example of a chat history;
FIG. 6 is an illustration showing exemplary information stored in a switching position storing section 110;
FIG. 7 is a flowchart showing an operation of the information processor 1 at the time of composition of a mail message in a non-particular mail message display mode;
FIG. 8 is a flowchart showing an operation of the information processor 1 at the time of composition of the mail message in a particular mail message display mode;
FIG. 9 is a flowchart showing a detailed operation of a mail message composing section 103 when a mail message composing process is being executed at step S202;
FIG. 10 is a flowchart showing an operation of the information processor 1 at the time of receipt of the mail message;
FIG. 11 is a flowchart showing details of a mail message return process at step S419;
FIG. 12 is a flowchart showing an operation of the information processor 1 when a mail message display instruction is given by a user;
FIG. 13 is a flowchart showing a detailed operation of a control section 105 at the time of execution of a chat redisplay process at step S506;
FIG. 14 is a flowchart showing an operation of a mail message organizing section 108.

### DESCRIPTION OF THE PREFERRED EMBODIMENTS

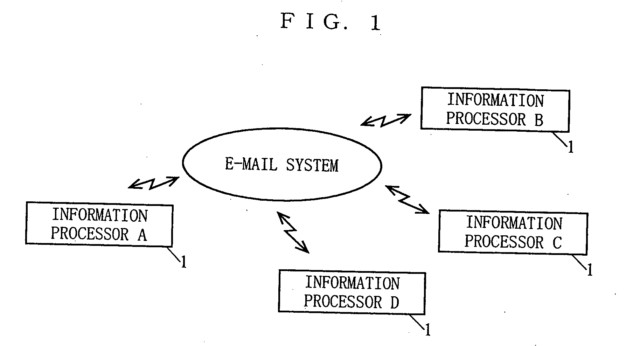

FIG. 1 is an illustration showing the entire structure of an exemplary system using an information processor 1 according to an embodiment of the present invention. In FIG. 1, the system is provided with four information processors 1 connected to the email system. The system does not require an infrastructure such as a dedicated chat server. The email system is a public network structured by the Internet, a wireless base station for a mobile phone, and a telephone line network, or the like. A conventional email message such as an email message sent and received via the Internet, or an email message used only between information processors administered by the same mobile phone company is assumed to be used between these information processors. That is, the email message used in the embodiment of the present invention does not have a special structure of its own dedicated to the present embodiment. Hereinafter, an email message is referred to as "a mail message" for simplification. Note that, in FIG. 1, alphabetical characters A to D are used so as to differentiate each information processor 1. Also, in FIG. 1, four information processors 1 are shown, but the number of information processors 1 may be three or less, or five or more. First, with reference to FIG. 1, a brief outline of a function of the information processor 1 according to the embodiment of the present invention is described.

The information processor 1 is a communications terminal such as a mobile phone that can compose, display, send, and receive a mail message. The information processor 1 displays mail messages in chronological order of sending and receiving, thereby realizing a display screen on which a chat is being performed between a plurality of information processors.

Hereinafter, a mail source user of a mail message to be displayed in chronological order of sending and receiving is referred to as "a particular user", a display mode of displaying mail messages in chronological order of sending and receiving is referred to as "a particular mail message display mode", and sending and receiving mail messages in the particular mail message display mode is referred to as "carrying out a chat session".

In general, a chat refers to a system in which a communications terminal sends text information to a dedicated server on the Internet, and the dedicated server displays accumulated text information in order of occurrence of sending so as to realize a display screen on which the plurality of users are simulating a conversation (chat). However, in the present embodiment, a chat refers to communication realized only by the information processor 1. That is, a term "chat" used in the present embodiment is different from an ordinary chat in that no dedicated server is used.

The information processor 1 can also receive a mail message from a user (hereinafter referred to as "a non-particular user") that is not designated as a particular user. If the mail message from the non-particular user is received during the chat session, the information processor 1 can notify of such by using a PICT display, etc., and switch a screen display for displaying the contents of the mail message based on an instruction from the user.

The information processor 1 can add and/or delete any user who is allowed to join the chat session even in the course of the chat session with the particular user in the particular mail message display mode.

The information processor 1 can perform bulk deleting of sent and received mail messages displayed in the particular mail message display mode. Thus, the information processor 1 can easily delete only the mail messages used in the chat session, thereby enabling reduction of waste in a memory area used for storage of mail messages.

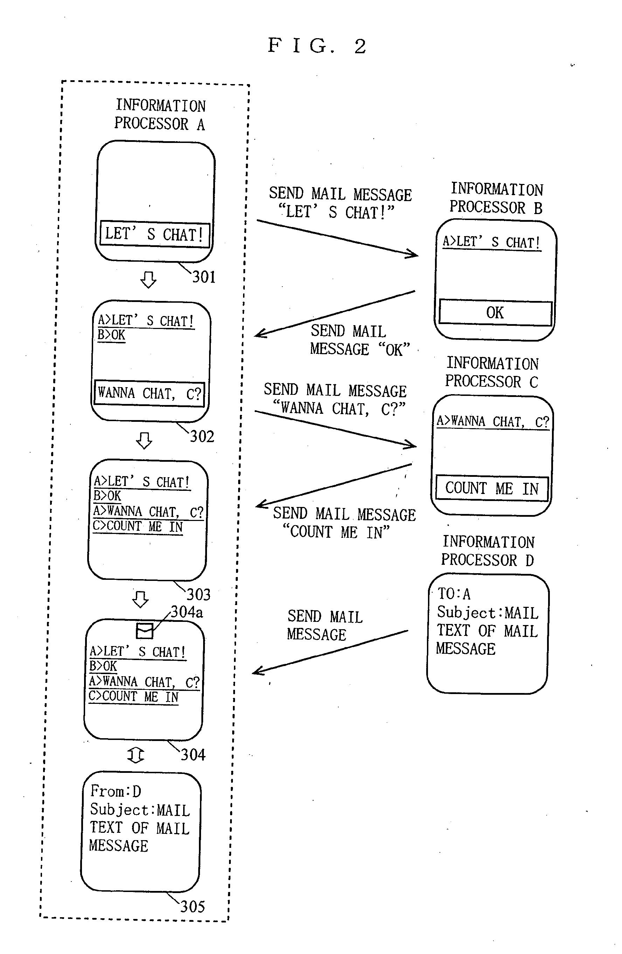

FIG. 2 is an illustration showing an exemplary display screen of the information processor 1. Hereinafter, a brief outline of the chat session is described with reference to FIGS. 1 and 2. Note that a display screen shown in FIG. 2 is illustrative only, and that a display format of the screen, or the like, is not restricted thereto. Thus, display linage and display color may be customized arbitrarily, and the display format may be changed automatically according to the mail source user of the mail message.

A display screen 301 is a screen that composes the text ("Let's chat!") of a mail message. It is assumed that the information processor A has registered the information processor B as the particular user for the chat session. Thus, the information processor A only requires the user to input the mail message text alone so as to send the mail message to the information processor B. In this case, the user does not have to input a destination mail address, or the like.

The information processor 1 can send the mail message by using pre-registered text (hereinafter referred to as "auto text"), thereby saving the user from inputting the text of the mail message. Also, the information processor 1 can allocate such an operation as input of the registered auto text or mail sending to a particular operation button for sending the mail message without inputting text. As a result, even when circumstances do not easily permit the sending of a return mail message, the user can still send a mail message in reply with a simple operation. Note that the auto text may be registered in the information processor 1 as a default setting, or be newly registered by the user. Alternatively, the text that has been sent during an earlier chat session may be automatically registered as auto text. Note that the particular user may be pre-registered, or registered as such based on the designation at the time of sending of a mail message.

When the mail message from the information processor A is received, the information processor B displays the received mail message "Let's chat!" on the screen, composes a return mail message, e. g., "OK", and sends the mail message to the information processor A.

A display screen 302 is a screen on which the information processor A, which has received the return mail message from the information processor B, composes the text of a next return mail message. On the display screen 302, sent and received mail messages are displayed in chronological order of sending and receiving, while the mail message "Wanna chat, C?" to be sent is being displayed at the bottom of the screen.

A display screen 303 is a screen of the information processor A when a return mail message "Count me in" is received from the information processor C. It is assumed that the information processor A newly adds the information processor C as a user that is allowed to join the chat session during the chat session (in this case, at the time of sending the mail message "Wanna chat, C?"). From that time, the chat session is carried out among the following three information processors: the information processor A, the information processor B, and the information processor C.

A display screen 304 is a screen of the information processor A when a mail message is received from a non-particular user (in this case, the information processor D) during the chat session. When the mail message is received from the non-particular user, the information processor A uses a PICT display 304a for notifying the user of receipt of the mail message, but does not display the contents of the received mail message immediately.

If the user gives an instruction to display the received mail message in response to the PICT display, the information processor A switches from the particular mail message display mode to the display mode of a non-particular mail message display mode, and changes the screen from the display screen 304 to a display screen 305 for redisplaying the contents of the mail message from the non-particular user. Here, the non-particular mail message display mode is a display mode other than the particular mail message display mode. For example, the non-particular mail message display mode is used for displaying all indexes of the received mail messages in response to a request from the user, and for displaying full text of one mail message selected therefrom. Generally, the following two different screens are used in the mobile phone, etc.: a screen for displaying the mail message and a screen on which a function selection menu is displayed. However, in the present embodiment, these two screens do not necessarily need to be distinguished. Thus, in the following description, the menu screen of the information processor 1 is assumed to be a screen categorized as the non-particular mail message display mode. That is, all display modes other than the particular mail message display mode are referred to as the non-particular mail message display mode.

The information processor A switches the display mode to the particular mail message display mode from the non-particular mail message display mode in response to a request from the user, thereby restoring the display screen 305 to the display screen 304 for redisplaying the contents of the chat session that have been displayed before mode switching.

As shown in FIG. 2, the information processor 1 switches the screen display to the particular mail message display mode at the time of sending and receiving of the mail message between the designated particular users, thereby displaying the mail messages sent and received between the particular users in the chronological order and displaying the mail message being composed on the screen. Furthermore, if the non-particular mail message is received, the user can arbitrarily switch the display screen to the non-particular mail message display mode so as to send the return mail message. Thus, it is possible to display on the screen only the mail messages sent and received between each information processor, whereby chat-like real time communication can be realized.

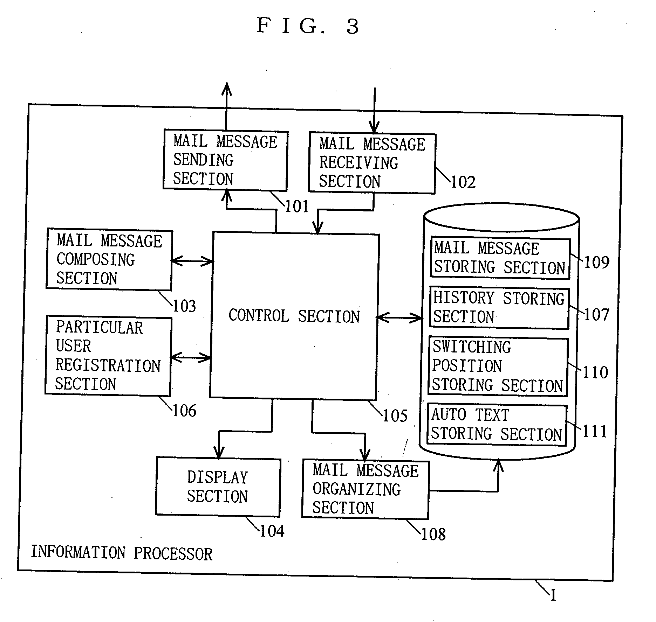

Hereinafter, the structure and an operation of the information processor 1 are described in detail. FIG. 3 is a block diagram showing the functional structure of the information processor 1. In FIG. 3, the information processor 1 is provided with a mail message sending section 101, a mail message receiving section 102, a mail message composing section 103, a display section 104, a control section 105, a particular user registration section 106, a history storing section 107, a mail message organizing section 108, a mail message storing section 109, a switching position storing section 110, and an auto text storing section 111.

The mail message sending section 101 sends a mail message that has been designated by the control section 105 as a mail message to be sent, and notifies the control section 105 of the sending result (completion of sending).

The mail message receiving section 102 receives the mail message sent to the terminal incorporating the information processor 1, and notifies the control section 105 of the received mail message.

The mail message composing section 103 notifies the control section 105 so as to cause the display section 104 to display a mail message composing screen, and performs such an operation as setting of the destination mail address or input control of text of a return mail message for composing the return mail message.

In response to an instruction from the control section 105, the display section 104 displays the mail message composing screen, the received mail message, and a menu screen, etc. As described above, the display mode of the screen displayed by the display section 104 is categorized into two types: the particular mail message display mode and the non-particular mail message display mode. The display section 104 displays the mail message on the screen suitable for the display mode instructed by the control section 105. If an instruction is given so as to display the sent and received mail messages in the particular mail message display mode, the display section 104 sequentially displays only text of the sent and received mail messages on the screen in chronological order of sending and receiving. Exemplary screen displays in the particular mail message display mode are display screens 301 to 304, each shown in FIG. 2. If an instruction is given so as to display the sent and received mail message in the non-particular mail message display mode, the display section 104 displays, for example, only one designated mail message on the screen. An exemplary screen display of the received mail message in the non-particular mail message display mode is the display screen S305 shown in FIG. 2.

If an instruction is given from the control section 105 so as to display the mail message composing screen, the display section 104 displays the mail message composing screen suitable for the current display mode. Exemplary mail message composing screens in the particular mail message display mode are the display screens 301 and 302 shown in FIG. 2.

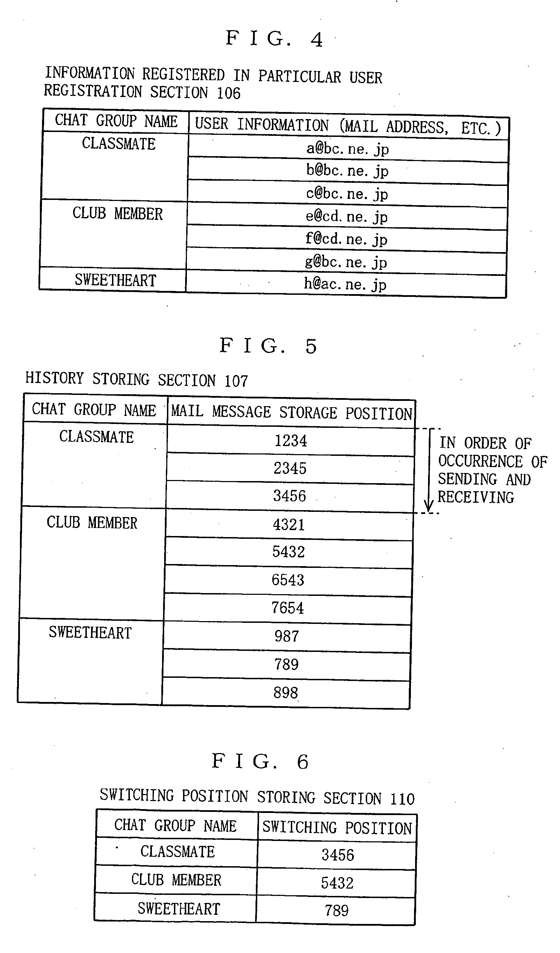

The particular user registration section 106 is a storing section for registering a user (particular user) whose mail message is to be displayed in the particular mail message display mode, and a processing section for adding, changing, and deleting the registration contents if required. Any particular users registered in the particular user registration section 106 are managed on a chat group basis. The chat group is a set of friends with whom the user desires to carry out the chat session at the same time. For example, each chat group is set up based on the category designated by the user, such as occupational position, hobby, or contact information, etc. FIG. 4 is an illustration showing exemplary particular users registered in the particular user registration section 106. As shown in FIG. 4, in the particular user registration section 106, user information (mail address, etc.) is registered for every chat group. Furthermore, the particular user registration section 106 can add and delete any particular user when the mail message is being sent and received in the particular mail message display mode. Note that the particular user may be pre-registered, or may be registered based on the designation at the time of sending of the mail message.

The control section 105 is a processor provided with the following three functions: a particular mail message display control function for causing the display section 104 to arrange the mail messages sent and received between the particular users in chronological order of sending and receiving, a non-particular mail message display control function for causing the display section 104 to display one arbitrary mail message selected from among the sent and received mail messages, and a display mode control function for controlling switching between the particular mail message display mode and the non-particular mail message display mode.

The control section 105 determines whether a mail source user of the received mail message is a particular user or not, selects the display mode based on the determination result, and switches the display mode if required for causing the display mode 104 to display the screen suitable for the display mode. The control section 105 stores, in the switching position storing section 110, information indicating the time of switching of the display mode to the non-particular mail message display mode from the particular mail message display mode.

In the case of returning to the particular mail message display mode after the display mode has been switched to the non-particular mail message display mode from the particular mail message display mode, the control section 105 redisplays the contents displayed at the time of switching. Alternatively, the control section 105 displays any mail message, if any, sent and received between the particular users during the lapse of time necessary for displaying the display in the non-particular mail message mode so as to arrange the mail messages in chronological order of sending and receiving for redisplaying the contents displayed at the time of switching.

The control section 105 performs start and end controls of the particular mail message display mode based on an instruction inputted from the user. The control section 105 also performs control so that the sent and received mail messages notified from the mail receiving section 102 or the mail message composing section 103 are stored in the mail message storing section 109.

If the sent and received mail message is a mail message to or from the particular user, the control section 105 stores the mail message in the mail message storing section 109 and stores a history (hereinafter referred to as "a chat history") about the sending and receiving of the mail message in the chat history storing section 107.

If the sent and received mail message is not a mail message to or from the particular user, the control section 105 only stores the mail message in the mail message storing section 109, and does not set a chat history of the mail message.

If a chat session end instruction is given from the user, the control section 105 notifies the mail message organizing section 108 that the chat session is ended for deleting the mail messages used for the chat session and corresponding chat histories from the mail message storing section 109 and the history storing section 107.

The mail message storing section 109 stores the sent and received mail message based on the control from the control section 105.

The history storing section 107 stores the chat history. FIG. 5 is an illustration showing an example of the chat history. As shown in FIG. 5, in the chat history, a storage position indicating where the mail message of each chat group is stored in the mail storing section 109 is registered in chronological order of sending and receiving. The chat history is used for checking the contents of the chat session after the chat session has ended, or forwarding the contents of the chat session to another user. Note that, in one chat group, one chat history may be structured by the contents of one chat session, a series of the contents of several chat sessions, or the revised contents edited from the original contents of one chat session. The control section 105 sets each group and structures the chat history therein.

The mail message organizing section 108 performs bulk deleting of the mail messages displayed in the particular mail message display mode and corresponding chat histories on a group basis. Bulk deleting is performed when the chat session is ended, or when the instruction is given from the user. Note that, when performing automatic deleting at the time of ending of the chat session, the mail organizing section 108 may notify the user thereof so that the automatic deleting is performed only if receiving approval from the user.

The switching position storing section 110 stores the storage position of the mail message, which has been stored in the mail message storing section 109, on a group basis in response to the instruction from the control section 105. The storage position is used in returning to the particular mail message display mode after switching to the non-particular mail message display mode from the particular mail message display mode. Thus, hereinafter, it is referred to as "a switching position".

FIG. 6 is an illustration showing exemplary information stored in the switching position storing section 110. As shown in FIG. 6, the switching position of each chat group is stored in the switching position storing section 110. For example, the switching position of the chat group "classmate" is "3456". That is, the chat carried out among the chat group "classmate" has been switched to the non-particular mail message display mode when the mail message whose storage position is "3456" has been received. Furthermore; the switching position of the chat group "club member" is "5432". Here, with reference to the exemplary illustration shown in FIG. 5, during the chat carried out among the chat group "club member", the information processor 1 has received the mail messages whose storage positions are "6543" and "7654" after receiving the mail message whose storage position is "5432".

The auto text storing section 111 stores auto text used in composing the mail message in the particular mail message display mode. The auto text includes the pre-registered auto text and the auto text registered based on the instruction from the control section 105. The auto text registered by the control section 105 may be a part or the entire of the text of the earlier received mail message, or the text inputted by the user.

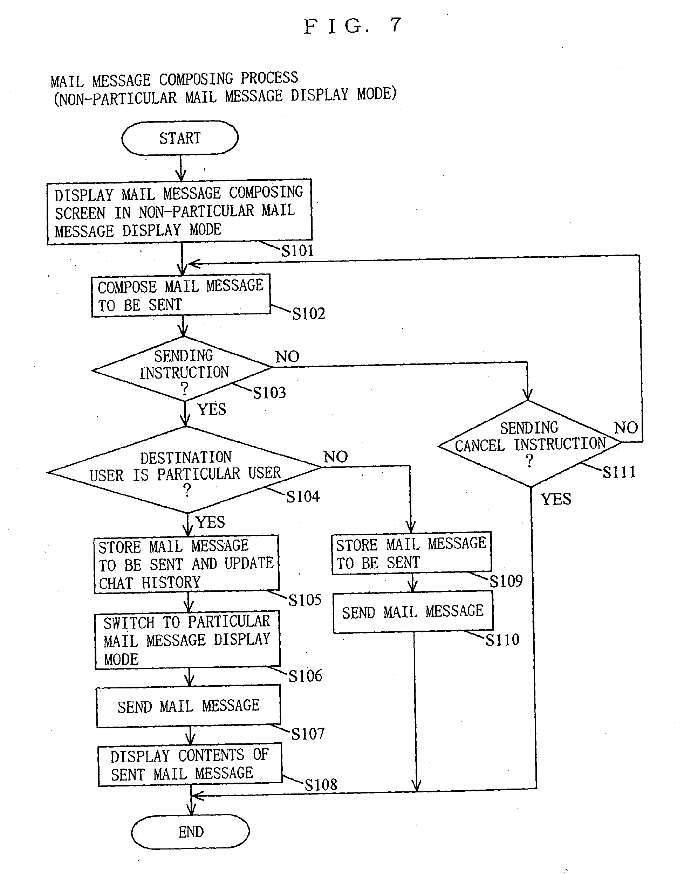

Next, the operation of the information processor 1 is described in detail. FIG. 7 is a flowchart showing the operation of the information processor 1 at the time of composition of the mail message in the non-particular mail message display mode. Hereinafter, with reference to FIG. 7, the operation of the information processor 1 at the time of composition of the mail message in the non-particular mail message display mode is described. The mail message for the particular user can be also composed in the non-particular mail message display mode, which will be described further below. Note that, as aforementioned, the mail message used in the present embodiment is not a special but a conventional mail message.

First, if the mail message composing section 103 receives a request from the user so as to compose a mail message, the control section 105 causes the display section 104 to display the mail message composing screen in the current display mode, that is, the non-particular mail message display mode (step S101).

Next, the mail message composing section 103 composes the mail message to be sent by composing text of the mail message based on input from the user and setting a destination user (a destination address, etc.) of the mail message (step S102).

Next, the mail message composing section 103 determines whether a mail message sending instruction is given by the user (step S103). If the sending instruction is not given, the mail message composing section 103 determines whether a sending cancel instruction is given by the user (step S111). If the sending cancel instruction is not given, the mail message composing section 103 returns to step S102 for continuing composition of the mail message. On the other hand, if the sending cancel instruction is given, the mail message composing section 103 cancels composition and sending of the mail message, and ends the process. Note that the mail message composing section 103 may store the text of the mail message under composition in a memory (not shown) of the information processor 1 as a mail message under composition for later reuse.

On the other hand, if it is determined that the sending instruction is given at step S103, the control section 105 refers to the particular user registration section 106 for determining whether the destination user of the mail message composed by the mail message composing section 103 is a particular user or not (step S104).

If the destination user is not a particular user, the control section 105 stores the mail message to be sent in the mail message storing section 109 (step S109), notifies the mail message to the mail sending section 101 for sending the mail message (step S110), and ends the process.

On the other hand, if the destination user is a particular user, the control section 105 stores the mail message to be sent in the mail message storing section 109, and adds a storage position of the mail message to a chat history, which has been stored in the history storing section 107, of a chat group to which the particular destination user belongs for updating the chat history (step S105). Next, the control section 105 switches the current display mode to the particular mail message display mode from the non-particular mail message display mode (step S106).

Next, the control section 105 notifies the mail message to be sent to the mail sending section 101 so as to send the mail message (step S107). Then, the control section 105 instructs the display section 104 to perform screen display in the particular mail message display mode, causes the display section 104 to display the just sent mail message in chronological order of sending and receiving (step S108), and ends the process. Specifically, if a first mail message has been sent in the chat group to which the destination user belongs, the control section 105 causes the display section 104 to display the sent mail message on the top line of the screen at step S108. On the other hand, if the mail message is not a first mail message, the control section 105 causes the display section 104 to display the mail messages that have been sent and received in the chat group in chronological order of sending and receiving, and to display the just sent message on the bottom line of the screen, i.e., the position where the most current mail message is displayed.

Note that, at step S106, the screen display is assumed to be automatically switched to the particular mail message display mode, but switching of the display mode may be performed according to the instruction from the user.

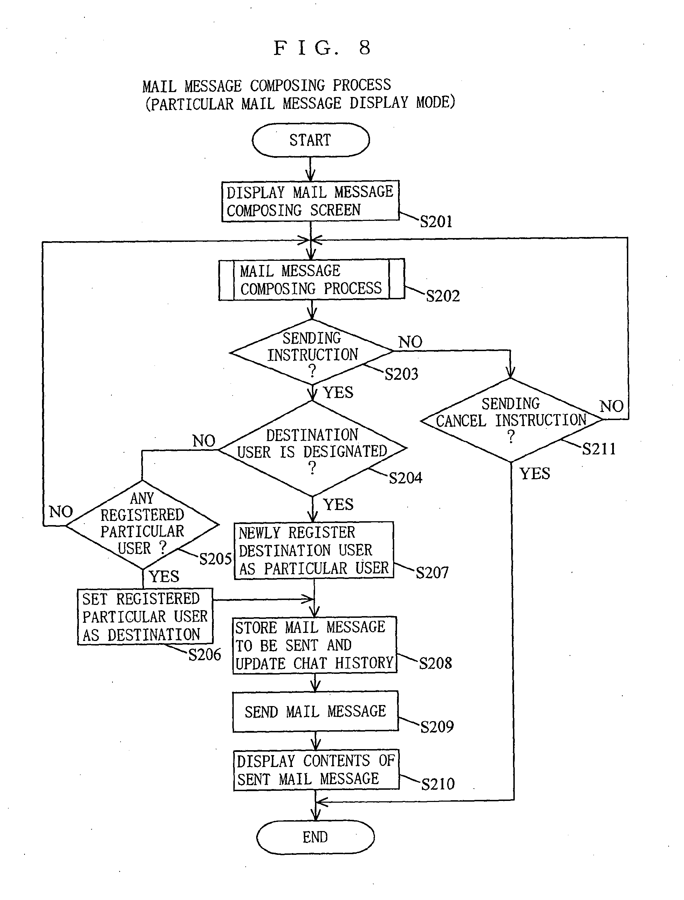

FIG. 8 is a flowchart showing the operation of the information processor 1 at the time of composition of the mail message in the particular mail message display mode. The information processor 1 enters the particular mail message display mode by automatically switching (S106 of FIG. 7) when the mail message is sent to the particular user, but also by the instruction given by the user in order to start the particular mail message display mode (chat session). Hereinafter, with reference to FIG. 8, the operation of the information processor 1 at the time of composition of the mail message in the particular mail message display mode is described.

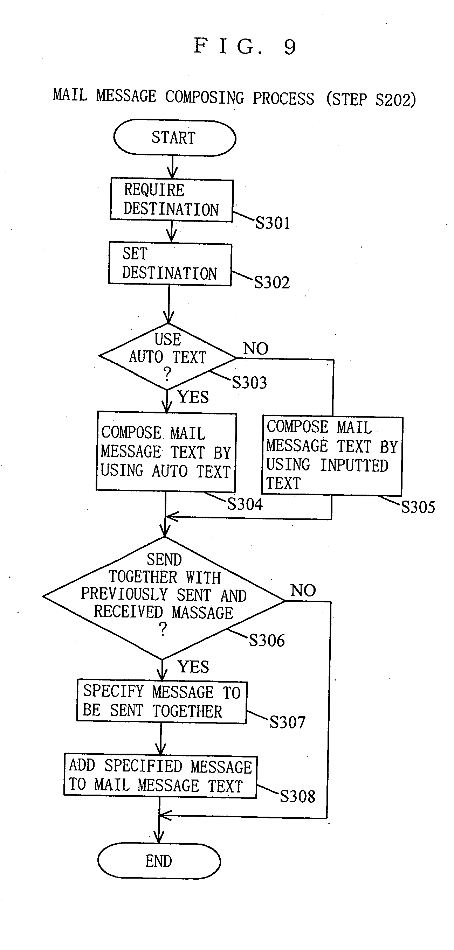

When the mail composing section 103 starts composition of a mail message, the control section 105 first causes the display section 104 to display the mail message composing screen in the particular mail message display mode (step S201). Next, the mail message composing section 103 composes the mail message to be sent by composing text of the mail message based on input from the user and setting a destination user (a destination address) of the mail message (step S202). A mail message composing process (step S202) will be described further below by using FIG. 9.

Next, the mail message composing section 103 determines whether a mail message sending instruction is given by the user (step S203). If the sending instruction is not given, the mail message composing section 103 determines whether a sending cancel instruction is given by the user (step S211). If the sending cancel instruction is not given, the mail message composing section 103 returns to step S202 for continuing composition of the mail message. On the other hand, if the sending cancel instruction is given, the mail message composing section 103 cancels composition and sending of the mail message, and ends the process. Note that, when sending is canceled, the mail message composing section 103 may store the text of the mail message under composition in a memory (not shown) as a mail message under composition for later reuse.

On the other hand, if it is determined that the sending instruction is given at step S203, the control section 105 refers to the mail message composed by the mail message composing section 103 for determining whether the destination user is designated or not (step S204).

If the destination user is not designated, the control section 105 refers to the particular user registration section 106 for determining whether a particular user is registered or not (step S205). If the particular user is not registered, the control section 105 instructs the mail message composing section 103 to return to step S202 and continue composition of the mail message to designate the destination user. On the other hand, if the particular user is registered, the control section 105 sets the registered particular user as the destination user (step S206), and proceeds to step S208. In the case where a plurality of chat groups are registered, the control section 105 sets the particular user whose chat group is selected by the user as the destination user, or determines a chat group carrying out the ongoing chat session for setting the particular user belonging to the chat group as the destination user.

On the other hand, if it is determined the destination user is designated at step S204, the control section 105 newly registers the designated destination user as a particular user in the particular user registration section 106 (step S207), and proceeds to step S208. If the designated destination user has already been registered as a particular user, it is assumed that the control section 105 does not make registration. Furthermore, if it is uncertain to which chat group the user to be newly registered should belong, the control section 105 registers the chat group carrying out the ongoing chat session as the chat group of the user. Note that the control section 105 may allow the user to select and designate the chat group.

At step S208, the control section 105 stores the mail message to be sent in the mail message storing section 109, and adds a storage position of the mail message to a chat history, which has been stored in the history storing section 107, of a chat group to which the particular destination user belongs for updating the chat history.

Next, the control section 105 notifies the mail message to the mail message sending section 101 so as to send the mail message (step S209). Then, the control section 105 causes the display section 104 to display the just sent mail message in chronological order of sending and receiving (step S210), and ends the process.

FIG. 9 is a flowchart showing a detailed operation of the mail message composing section 103 when a mail message composing process is being executed at step S202. Hereinafter, with reference to FIG. 9, the mail message composing process is described in detail.

First, the mail message composing section 103 requires the user to designate a destination (step S301). Next, the mail message composing section 103 sets the destination (step S302). Specifically, if the designation is designated by the name of a user, the mail message composing section 103 sets the designated user as the destination. If the destination is designated by the name of a chat group, the mail message composing section 103 sets all the users belonging to the chat group as the destination. If no designation is given, the mail message composing section 103 proceeds to a next step without setting the destination.

Next, the mail message composing section 103 determines whether the use of auto text is instructed by the user or not (step S303).

If the use of auto text is instructed, the mail message composing section 103 composes text of the mail message by using the designated auto text (step S304), and proceeds to step S306. On the other hand, if the use of auto text is not instructed, the mail message composing section 103 composes text of the mail message by using text inputted by the user (step S305), and proceeds to step S306.

At step S306, the mail message composing section 103 determines whether the text that has been sent and received in the chat group is sent together or not (step S306). This determination may be made based on the instruction from the user, or based on the setting contents.

If the text that has been sent and received in the chat group is not sent together, the mail message composing section 103 ends the process. On the other hand, if the text that has been sent and received in the chat group is sent together, the mail message composing section 103 causes the user to specify a range of the text, which has been sent and received in the chat group, desired to be sent (step S307). The specified range could cover the entire or a part of the text that has been sent and received. Note that the mail message composing section 103 can specify the entire message(s) automatically.

Next, the mail message composing section 103 composes the final mail message by adding the text of the specified range to the text of the mail message to be sent (step S308), and ends the process. The specified range of the text may be placed at the head of the text of the mail message to be sent, or placed at the end thereof. Also, the mail message composing section 103 may reproduce the text to be added from the chat history, or may compose from a display buffer memory (not shown).

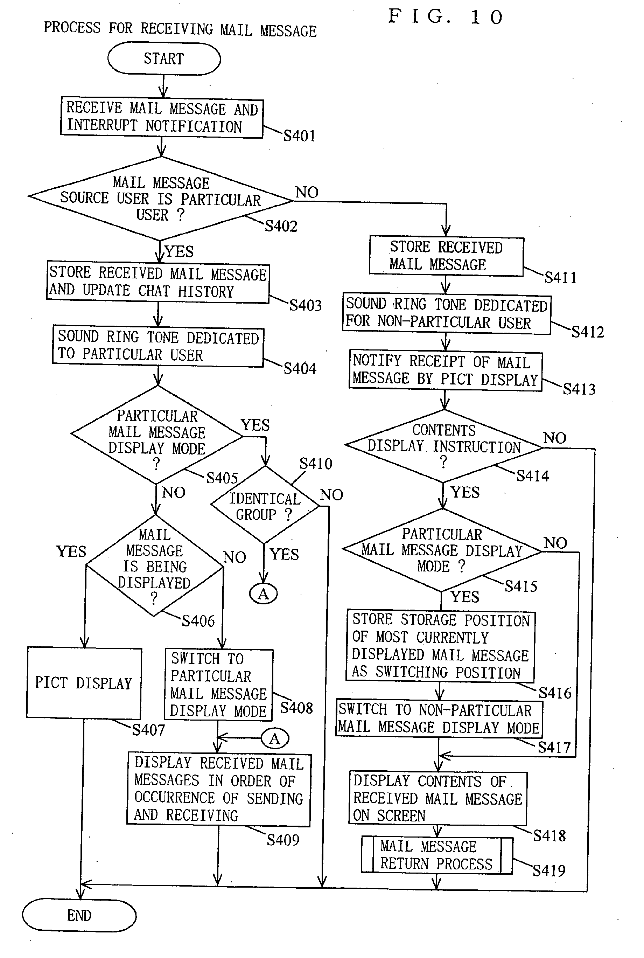

FIG. 10 is a flowchart showing an operation of the information processor 1 at the time of receipt of the mail message. Hereinafter, with reference to FIG. 10, the operation of the information processor 1 at the time of receipt of the mail message is described. If the mail message is received, the mail message receiving section 102 first notifies the control section 105 of receipt of the mail message (step S401).

In response to the interrupt, the control section 105 refers to the particular user registration section 106 for determining whether a mail source user of the received mail message is a particular user or not (step S402).

If the mail source user of the received mail message is a particular user, the control section 105 stores the received mail message in the mail message storing section 109, and updates a chat history stored in the history storing section 107 (step S403). Specifically, the control section 105 determines a chat group to which the mail source user of the received mail message belongs, and adds a storage position of the received mail message at the bottom line of the chat history of the chat group.

Next, the control section 105 notifies the user of receipt of the particular mail message by causing a speaker (not shown) to sound a ring tone dedicated for a particular user, and causing a vibrator (not shown) to vibrate (step S404). Note that the user can, for example, disable the ring tone by selecting manner mode or turning the volume OFF.

Next, the control section 105 determines whether the current display mode is a particular mail message display mode or not (step S405). If the current display mode is a particular mail message display mode, the control section 105 determines whether the chat group to which the mail source user of the received particular mail message belongs is identical to the chat group being displayed or not (step S410). If it is identical to the chat group being displayed, the control section 105 causes the display section 104 to display the received mail message in chronological order of sending and receiving (step S409), and ends the process. On the other hand, if it is not identical to the chat group being displayed, the control section 105 ends the process.

On the other hand, if it is determined that the current display mode is not a particular mail message display mode at step S405, the control section 105 determines whether a mail message is being displayed or not (step S406).

If it is determined that a mail message is being displayed, the control section 105 notifies the user by using a PICT display that the mail message has been received from the particular user (step S407), and ends the process.

On the other hand, if it is determined that a mail message is not being displayed, the control section 105 switches the display mode to the particular mail message display mode (step S408), causes the display section 104 to display the received mail message in chronological order of sending and receiving (step S409), and ends the process. An exemplary display screen displayed at step S409 is the display screen 303 shown in FIG. 2. When the mail message "Count me in" from the information processor C is received, the information processor A displays the four mail messages on the screen in chronological order of sending and receiving. The send/receive history of these four mail messages is stored in the chat history storing section 107.

Here, description is returned to step S402 for detailing the remaining steps.

Returning to step S402, if it is determined that the mail source user is not a particular user at step S402, the control section 105 stores the received mail message in the mail message storing section 109 (step S411), sounds a ring tone dedicated for a non-particular mail message (step 412), and notifies the user of receipt of the mail message by using the PICT display (step S413). Note that the user can disable the ring tone by selecting manner mode or turning the volume OFF.

Next, the control section 105 determines whether an instruction is given by the user so as to display the contents of the received mail message or not (step S414). If the instruction is not given, the control section 105 ends the process. On the other hand, if the instruction is given, the control section 105 determines whether the current display mode is a particular mail message display mode or not (step S415).

If the current display mode is a particular mail message display mode, the control section 105 stores, in the switching position storing section 110, a storage position of either the most currently displayed sent or received mail message in the ongoing chat session as a switching position of the ongoing chat session (step S416). Next, the control section 105 switches the display mode to the non-particular mail message display mode (step S417), and proceeds to step S418.

On the other hand, if the current display mode is not a particular mail message display mode, the control section 105 proceeds to step S418.

At step S418, the control section 105 causes the display section 104 to display on the screen the mail, message whose contents are instructed to be displayed. An exemplary display screen displayed at step S418 is the display screen 305 shown in FIG. 2. The information processor A receives the mail message from t he information processor D, switches the display mode, and display on the screen the received mail message in the non-particular mail message display mode.

Next, the control section 105 performs a mail message return process (step S419), and ends the process.

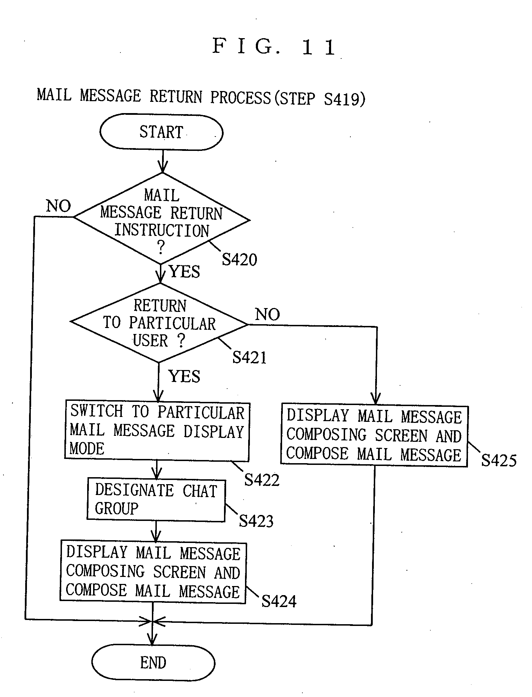

FIG. 11 is a flowchart showing details of the mail message return process at step S419. Hereinafter, the mail message return process is described in detail with reference to FIG. 11.

The control section 105 first determines whether a mail message return instruction is given by the user or not (step S420). If the mail message return instruction is not given, the control section 105 ends the process. On the other hand, if the mail message return instruction is given, the control section 105 determines whether an instruction is given so as to return a mail message to a particular user or not (step S421). If the instruction is given so as to return a mail message to a particular user, the control section 105 switches the display mode to the particular mail message display mode (step S422), and causes the user to designate the chat group to which the destination user belongs (step S423). Then, the control section 105 causes the display section 104 to display a mail message composing screen in the particular mail message display mode for causing the mail message composing section 103 to compose a mail message (step S424), and ends the process. When the mail message composing screen is displayed, the control section 105 may or may not cause the received mail message to be displayed in chronological order. Also, even if the instruction is given so as to return a mail message to a particular user, the control section 105 may switch the display mode to the particular mail message display mode according to an instruction from the user, instead of switching the display mode to the particular mail message display mode automatically.

On the other hand, at step S421, if the instruction is not given so as to return a mail message as a particular mail message, the control section 105 causes the display section 104 to display a mail message composing screen in the non-particular mail message display mode for causing the mail message composing section 103 to compose a mail message (step S425), and ends the process.

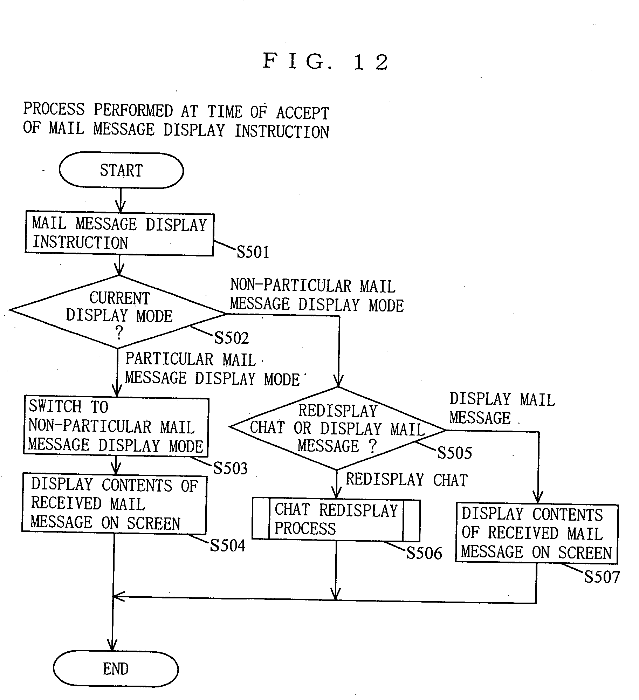

FIG. 12 is a flowchart showing an operation of the information processor 1 when a mail message display instruction is given by the user. Hereinafter, with reference to FIG. 12, the operation of the information processor 1 when the mail message display instruction is given by the user is described.

The control section 105 first accepts the mail message display instruction from the user (step S501). Next, the control section 105 determines the current display mode (step S502).

If the current display mode is a particular mail message display mode, the control section 105 switches the display mode to the non-particular mail message display mode (step S503). Next, the control section 105 causes the display section 104 to display the contents of the received mail message instructed to be displayed (step S504), and ends the process.

On the other hand, if the current display mode is a non-particular mail message display mode, the control section 105 determines if either of the following instructions is given by the user: an instruction so as to redisplay the chat or an instruction so as to simply display the contents of the mail message (step S505). If the instruction is given by the user so as to redisplay the chat, the control section 105 refers to a chat history stored in the chat history storing section 107, and obtains all the mail messages to be displayed from among the mail messages stored in the mail message storing section 109. Then, the control section 105 redisplays the contents of the chat session (step S506), and ends the process. On the other hand, if the instruction is given by the user so as to display the contents of the mail message, the control section 105 reads the mail message (irrespective of whether the mail source is either a particular user or a non-particular user, or the destination is either a particular user or a non-particular user) instructed to be displayed from the mail message storing section 109, causes the display section 104 to display the contents/thereof (step S507), and ends the process.

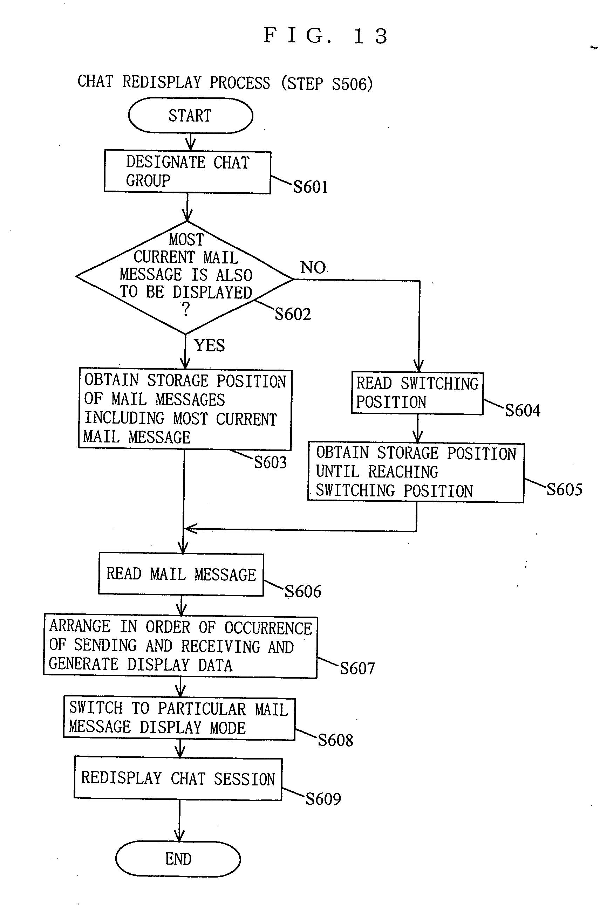

FIG. 13 is a flowchart showing a detailed operation of the control section 105 at the time of execution of a chat redisplay process at step S506. Hereinafter, with reference to FIG. 13, the operation of the control section 105 at the time of execution of the chat redisplay process is described.

The control section 105 first causes the user to designate a chat group to be displayed (step S601). Next, the control section 105 determines whether the most current mail message is also to be displayed or not based on the instruction from the user (step S602). Note that the determination may be made based on the pre-set contents.

If the most current mail message is also to be displayed, the control section 105 refers to the history storing section 107 for obtaining each storage position of the mail messages including the most current mail message, the mail messages of the chat group to be displayed (step S603), and proceeds to step S606.

On the other hand, if the most current mail message is not also to be displayed, the control section 105 refers to the switching position storing section 110 for reading a switching position of the chat group to be displayed (step S604). Next, the control section 105 refers to the history storing section 107, obtains each storage position of the mail messages of the chat group to be displayed until reaching the read switching position (step S605), and proceeds to step S606.

At step S606, the control section 105 reads the mail messages each corresponding to the storage positions read at step S603 or step S605 from the mail message storing section 109. Next, the control section 105 arranges the read mail messages in chronological order of sending and receiving for generating data for redisplaying the chat session (step S607).

Then, the control section 105 switches the display mode to the particular mail message display mode (step S608), display the chat session based on the generated redisplay data (step S609), and ends the process. If the chat session is redisplayed, the control section 105 may copy a part or all of the mail messages for storage in the auto text storing section 111 in accordance with the instruction from the user.

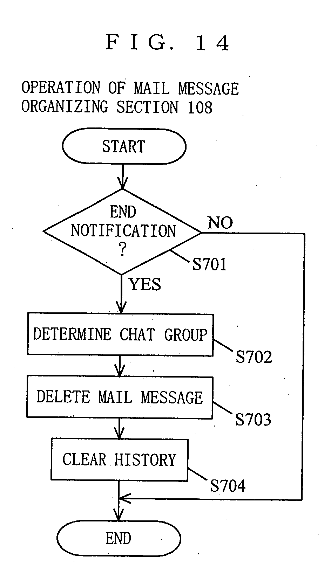

FIG. 14 is a flowchart showing an operation of the mail message organizing section 108. Hereinafter, with reference to FIG. 14, the operation of the mail message organizing section 108 is described.

The mail message organizing section 108 first determines whether an end notification of the chat session is received from the control section 105 or not (step S701). If the end notification is not received, the mail message organizing section 108 ends the process.

On the other hand, if the end notification is received, the mail message organizing section 108 determines a chat group to be ended (step 5702). Next, the mail message organizing section 108 refers to the history storing section 107 for determining a storage position of the mail message belonging to the determined chat group, and deletes the mail message stored in the storage position from the mail message storing section 109 (step S703). Next, the mail message organizing section 108 clears the mail message storage position registered in the chat history of the chat group (step S704), and ends the process.

As such, according to the present embodiment, when the mail message is sent and received between the designated particular users, the information processor 1 sets the screen display to the particular mail message display mode, and displays on the screen the mail message sent and received between the particular users and the mail message being composed so as to be arranged in chronological order of sending and receiving. Thus, it is possible to realize chat-like real time communication.

Furthermore, the sent and received mail message is a conventional mail message and is generally used. Thus, it is possible to realize a chat by exchanging messages without using an infrastructure such as a dedicated chat server.

Still further, the information processor 1 can categorize the users with whom the chat session is carried out into several groups, and carry out the chat session on a group basis.

Also, if the mail message from the non-particular user is received when the mail message is being exchanged in the particular mail message display mode, the information processor 1 can switch the screen display for checking the contents of the received mail message.

If the screen display is returned to the particular mail message display mode after switching, the information processor 1 can at least redisplay the contents displayed at the time of switching. Thus, the user has no difficulty in communicating by a chat.

Furthermore, the information processor 1 uses the send/receive history of the particular mail message for redisplaying the chat session again. Thus, it is possible to reduce the amount of memory usage compared with the case where all the contents of the chat session will be stored in the memory.

The information processor 1 can also register and/or delete the particular user when the chat session is being carried out, which is convenient for communicating by a chat.

Still further, the information processor 1 stores the history of the mail message displayed on the screen in the particular mail message display mode. Thus, it is possible to check the contents of the chat session after the chat session has ended, or forward the contents of the chat session to another user with ease.

The information processor 1 can also use a limited mail message storage area effectively by performing bulk deleting of all the mail messages displayed in the particular mail message display mode.

Furthermore, the information processor 1 can send the mail message only by inputting text of the mail message in the particular mail message display mode without inputting the destination mail address, etc.

Note that switching to the non-particular mail message display mode from the particular mail message display mode and vice versa may be performed with arbitrary timing different from that described in the present embodiment.

In the present embodiment, if the mail message is received from the particular user, the information processor 1 forcedly switches the display mode to the particular mail message display mode for displaying the received mail message. Otherwise, the information processor 1 may display only the mail message received from the particular user in the particular mail message display mode as a chat. At other times, the information processor 1 may display the received mail message as a non-particular mail message in the non-particular mail message display mode according to the instruction from the user. In this case, for example, if the mail message is received from the particular user in the non-particular mail message display mode, the information processor 1 may be set so as to display the received mail message in the non-particular mail message display mode, but not to display the received mail message again in the particular mail message display mode even if returning to the particular mail message display mode after receipt of the mail message. Alternatively, if the mail message is received from the particular user in the non-particular mail message mode, the information processor 1 may be set so as to display the received mail message in the particular mail message display mode if the display mode is switched to the particular mail message display mode after receipt of the mail message.

In the present embodiment, all the sent and received mail messages are deleted in bulk at the end of the chat session. Otherwise, according to the instruction from the user, those mail messages may be deleted in bulk with arbitrary timing after the chat session is ended, or a part of those mail messages may be deleted.

Note that, when the mail message is stored in the mail message storing section 109, the control section 105 may separate only the mail message received from the user displayed in the particular mail message display mode for storing the received mail message in the other storage area, or provide each mail message with information for identification of its display mode for storing the mail message.

Also, as security against a shortage of storage area of the mail message storing section 109, the control section 105 may be provided with protection functions separately, e. g., by setting different priorities for each mail message to be deleted. For example, any particular mail message is given higher deletion priority than any non-particular mail message.

Note that switching to the particular mail message display mode may be performed by the user with arbitrary timing, or may be automatically performed at substantially the same time that the mail message is returned or sent to a particular user or a particular address.

If the screen display is switched when a call-in signal is received or a suspend key is pressed, the control section 105 may arbitrarily switch the display mode for restarting sending and receiving of the mail message.

Note that the particular user registration section 106 may perform, during the chat session, addition of a particular user to a chat group or deletion therefrom based on an instruction from the user.

The information processor described in the present embodiment may be realized by installing, in a computer, a program that causes the computer to execute the above-described operations. A mobile phone or a personal digital assistant, etc., in which the program can be installed, may be used as the computer.

While the invention has been described in detail, the foregoing description is in all aspects illustrative and not restrictive. It is understood that numerous other modifications and variations can be devised without departing from the scope of the invention.

## Claims

1. An information processor (1) that sends and receives an email message between other communications terminals via a network and displays the sent and received email message, comprising:
particular mail message display means (104, 105) for displaying, in chronological order of sending and receiving, at least one email message sent and received between previously designated particular users;
non-particular mail message display means (104, 105) for displaying the sent and received email message; and
display mode control means (105) for controlling switching between a display by the particular mail message display means and a display by the non-particular mail message display means, wherein
when returning to the display by the particular mail message display means after the display has been switched to the display by the non-particular mail message display means from the display by the particular mail message display means, the display mode control means at least causes the particular mail message display means to redisplay contents displayed at a time of switching to the display by the non-particular mail message display means from the display by the particular mail message display means.

2. The information processor according to claim 1, further comprising history storing means (107) for storing a send/receive history of the at least one email message sent and received between the particular users, wherein
when the display is switched to the display by the non-particular mail message display means from the display by the particular mail message display means, the display mode control means stores the most current send/receive history stored in the history storing means, and causes (S604 to S609) the particular mail message display means to redisplay the contents displayed at the time of switching to the display by the non-particular mail message display means from the display by the particular mail message display means based on the stored most current send/receive history in order to return to the display by the particular mail message display means.

3. The information processor according to claim 1, wherein
when returning to the display by the particular mail message display means, the display mode control means causes the particular mail message display . means to display, in chronological order of sending and receiving, any email message, if any, sent and received between the particular users during a lapse of time necessary for displaying the display by the non-particular mail message display means.

4. The information processor according to claim 3, further comprising history storing means (107) for storing a send/receive history of the at least one email message sent and received between the particular users, wherein
when returning to the display by the particular mail message display means, the display mode control means causes (S603, S606 to S609) the particular mail message display means to display, based on a last send/receive history stored in the history storing means, the at least one email message sent and received between the particular users during the lapse of time necessary for displaying the display by the non-particular mail message display means in chronological order of sending and receiving.

5. The information processor according to claim 1, further comprising mail message composing means (103) for composing the email message to be sent to either a particular user or a non-particular user during the display by the particular mail message display means.

6. The information processor according to claim 5, wherein
the mail message composing means composes (S304) the email message in accordance with pre-registered auto text.

7. The information processor according to claim 5, wherein
the mail message composing means composes (S206) the email message by assuming that all of the at least one particular user is designated as a destination.

8. The information processor according to claim 5, wherein
when the email message to be sent to the non-particular user is composed, the mail message composing means composes (S307) the email message including contents of the at least one message that has been displayed by the particular mail message display means.

9. The information processor according to claim 1, further comprising mail message organizing means (108) for performing bulk deleting of the at least one email message used for the display by the particular mail message display means.

10. The information processor according to claim 9, wherein
when the display by the particular mail message display means is ended, the mail message organizing means automatically performs (S703) bulk deleting of the at least one email message used in the display by the particular mail message display means.

11. The information processor according to claim 1, further comprising user registration means (106) for registering and/or deleting the at least one particular user when the display is being performed by the particular mail message display means.

12. The information processor according to claim 1, wherein
when the at least one email message is received from the at least one particular user during the display, the particular mail message display means newly displays the at least one email message in chronological order of sending and receiving.

13. The information processor according to claim 1, wherein
when the email message is received from a non-particular user during the display, the particular mail message display means displays (S415) on a. screen a notification of the received email message.

14. The information processor according to claim 1, wherein
when the at least one email message is received from the at least one particular user, the display mode control means automatically switches (S409) the display to that of the display by the particular mail message display means.

15. The information processor according to claim 1, further comprising history storing means (107) for storing, on a group basis, a send/receive history of the at least one email message sent and received between the particular users, wherein
the particular mail message display means refers to the history storing means in accordance with an instruction from a user, and redisplays the at least one email message of a designated group for displaying in chronological order of sending and receiving.

16. An information processing method for displaying an email message sent and received by a communications device (1), wherein
the communications device comprises as a display mode:
a particular mail message display mode of displaying, in chronological order of sending and receiving, at least one email message sent and received between previously designated particular users; and
a non-particular mail message display mode of displaying the sent and received email message, and the method comprises:
a step (S419) in which the communications device switches a display to that of a display in the non-particular mail message display mode from a display in the particular mail message display mode; and
a step (S608) in which the communications device returns to the display in the particular mail message display mode after switching, wherein
in the step of returning to the display in the particular mail message display mode, at least contents displayed at a time of switching to the display in the non-particular mail message display mode from the display in the particular mail message display mode are redisplayed (S609) by the communications device.

17. The information processing method according to claim 16, further comprising a step (S403) in which the communications device stores a send/receive history of the at least one email message sent and received between the particular users, wherein
in the step of switching to the display in the non-particular mail message display mode from the display in the particular mail message display mode, a most current send/receive history is stored by the communications device, and
in the step of returning to the display in the particular mail message display mode, the contents displayed at the time of switching to the display in the non-particular mail message display mode from the display in the particular mail message display mode are redisplayed by the communications device based on the most current send/receive history stored by the communications device.

18. The information processing method according to claim 16, further comprising a step (S403) in which the communications device stores a send/receive history of the at least one email message sent and received between the particular users, wherein
in the step of returning to the display in the particular mail message display mode, the at least one email message sent and received, between the particular users, during a lapse of time necessary for displaying the display in the non-particular mail message mode, is displayed, by the communications device based on the send/receive history that has been stored by a time of switching to the display in the particular mail message display mode from the display in the non-particular mail message display mode in chronological order of sending and receiving.

19. The information processing method according to claim 16, further comprising a step (S703) in which the communications device deletes the at least one email message used for the display in the particular mail message display mode when the display in the particular mail message display mode is ended.

20. An information processing program for causing a computer (1) to display an email message sent and received via a network, and
the computer comprises as a display mode:
a particular mail message display mode of displaying, in chronological order of sending and receiving, at least one email message sent and received between previously designated particular users; and
a non-particular mail message display mode of displaying the sent and received email message, and the program comprises:
a step (S419) of causing the computer to switch the display mode to the non-particular mail message display mode from the particular mail message display mode; and
a step (S608) of causing the computer to return to the particular mail message display mode after switching, wherein
in the step of causing the computer to return to the particular mail message display mode, the computer is caused to redisplay (S609) at least contents displayed at a time of switching to the display in the non-particular mail message display mode from the display in the particular mail message display mode.

21. The information processing program according to claim 20, further comprising a step (S403) of causing the computer to store a send/receive history of the at least one email message sent and received between the particular users, wherein
in the step of causing the computer to switch the display mode, the computer is caused to store a most current send/receive history, and
in the step of causing the computer to return to the particular mail message display mode, the computer is caused to redisplay, based on the most current send/receive history stored by the computer, the contents displayed at the time of switching to the display in the non-particular mail message display mode from the display in the particular mail message display mode.

22. The information processing program according to claim 20, further comprising a step (S403) of causing the computer to store a send/receive history of the at least one email message sent and received between the particular users, wherein
in the step of causing the computer to return to the particular mail message display mode, the computer is caused to display, based on the send/receive history that has been stored by a time of switching to the display in the particular mail message display mode from the display in the non-particular mail message display mode, the at least one email message sent and received between the particular users during the lapse of time necessary for displaying the display in the non-particular mail message mode in chronological order of sending and receiving.

23. The information processing program according to claim 20, further comprising a step (S703) of causing the computer to delete the at least one email message used for the display in the particular mail message display mode when the display in the particular mail message display mode is ended.
